# EUROPÄISCHE PATENTSCHRIFT

(11) **EP 2 057 235 B1**
(45) Veröffentlichungstag und Bekanntmachung des Hinweises auf die Patenterteilung: **02.05.2018**
(21) Anmeldenummer: 07802929.5
(22) Anmeldetag: 27.08.2007
(51) Int. Cl.: C09C 1/02, C09C 1/04, C09C 1/24, C09C 1/30, C09C 1/36, C09C 1/40, C09C 3/06, C09C 3/00, C09C 3/12, B82Y 30/00

(54) **ANORGANISCH OBERFLÄCHENMODIFIZIERTE ULTRAFEINE PARTIKEL**
ULTRAFINE PARTICLES HAVING INORGANICALLY MODIFIED SURFACES
PARTICULES ULTRAFINES MODIFIÉES EN SURFACE DE FAÇON ANORGANIQUE

(30) Priorität: 25.08.2006 DE 102006039857
(43) Veröffentlichungstag der Anmeldung: 13.05.2009
(73) Patentinhaber: Sachtleben Chemie GmbH, 47198 Duisburg (DE)
(72) Erfinder: GROTHE, Sonja, 46147 Oberhausen (DE)
(74) Vertreter: Nobbe, Matthias
(86) Internationale Anmeldenummer: PCT/EP2007/058891
(87) Internationale Veröffentlichungsnummer: WO 2008/023073

(56) Entgegenhaltungen:
- EP-A- 0 587 105
- EP-A- 1 544 256
- DE-A1- 3 347 191
- DE-A1- 4 431 735
- GB-A- 2 242 420

## Beschreibung

Gegenstand der Erfindung sind anorganisch oberflächenmodifizierte ultrafeine Partikel, ein Verfahren zu deren Herstellung und deren Verwendung.

Insbesondere Gegenstand der Erfindung ist ein Verfahren zur anorganischen Oberflächenmodifizierung von ultrafeinen TiO₂-, Al₂O₃-, SiO₂-, BaSO₄-, ZnO- oder Fe₂O₃-Partikeln, besonders bevorzugt von ultrafeinen BaSO₄- oder TiO₂-Partikeln, ganz besonders bevorzugt von ultrafeinen BaSO₄-Partikeln und deren Verwendung.

Ultrafeine Partikel, beispielsweise auf der Grundlage von TiO₂, Al₂O₃, SiO₂, BaSO₄, ZnO, Fe₂O₃, werden in polymeren Werkstoffen, beispielsweise Lacken, Kunststoffen und Verbundwerkstoffen eingesetzt, um deren Eigenschaften zu verbessern.

Eine besondere Eigenschaft von ultrafeinen Partikeln mit Partikelgrößen kleiner als 0,1 µm ist dabei, dass sie das sichtbare Licht nicht streuen. Setzt man solche Partikel in transparenten Lacken oder Kunststoffen ein, wird deren Transparenz nicht beeinflusst. Die sonstigen Systemeigenschaften, beispielsweise die mechanischen Eigenschaften können aber durch den Einsatz von ultrafeinen Partikeln deutlich verbessert werden. Hierbei spielt die Grenzfläche der ultrafeinen Partikel zum Polymer eine entscheidende Rolle. Da ultrafeine Partikel mit typischen Partikeldurchmessern d₅₀ kleiner als 0,1 µm sehr hohe spezifische Oberflächen aufweisen, wirkt sich die Art der Wechselwirkung zwischen Partikel und Polymer stark auf die Eigenschaften des Gesamtsystems aus. Aus diesem Grund ist es wünschenswert, die Wechselwirkung zwischen Partikel und Polymer gezielt einstellen zu können, um somit auch die Systemeigenschaften steuern zu können. In einigen Fällen kann auch eine kovalente Bindung zwischen Partikel und Polymermatrix erwünscht sein.

Einen Sonderfall innerhalb der typischen Pigmente und Füllstoffe stellt BaSO₄ dar. BaSO₄ ist chemisch inert und zeigt keinerlei Reaktion mit typischen Polymeren. Da sich BaSO₄ aber eben aufgrund dieser Inertheit, aufgrund seiner hohen thermischen Beständigkeit und wegen seiner geringen Moh'sschen Härte für den Einsatz in polymeren Werkstoffen besonders eignet, ist die Modifizierung der Partikeloberfläche von ultrafeinem BaSO₄ von besonderer Bedeutung.

Die Modifizierung der Oberflächen der ultrafeinen Partikel kann durch eine anorganische Umhüllung der Partikel bewirkt werden. Im Gegensatz zum unmodifizierten Partikel besteht bei anorganisch oberflächenmodifizierten Partikeln die Möglichkeit, funktionelle Gruppen mittels Modifizierung mit Alkoxyalkylsilanen auf die Oberfläche zu bringen. Die funktionellen Gruppen können dann so gewählt werden, dass die gewünschte Wechselwirkung zwischen Partikel und Polymer eintritt. Wird eine kovalente Einbindung der ultrafeinen Partikel in die Matrix erwünscht, so sind die funktionellen Gruppen so zu wählen, dass diese mit den funktionellen Gruppen der polymeren Werkstoffe reagieren können.

EP 0 587 105 A offenbart ein elektrisch-leitfähiges Bariumsulfat mit hohem Weissheitsgrad. Bei der Einarbeitung dieses Füllstoffes in Papier, Kunststoffe, Gummi, Harzen, Farben und Lacken bleibt die Transparenz der Werkstoffe erhalten. Die eingesetzten Ausgangspartikel haben einen Durchmesser von 0,1 µm und die Dicke der Beschichtung beträgt 2-80 nm.

EP 1 544 256 A offenbart ein Verfahren zur Herstellung von oberflächenmodifizierten TiO₂-Nanopartikeln, in dem die Beschichtung der TiO₂-Nanopartikel vorzugsweise oberhalb von 60°C erfolgt. Die eingesetzten Titandioxidpartikel haben eine durchschnittliche Größe von kleiner als 0,1 µm. Die Größen der beschichteten Titandioxidpartikel weichen erheblich von den Größen der Ausgangspartikel ab.

DE-C-33 47 191 offenbart ein Verfahren zur Herstellung von oberflächenbehandeltem BaSO₄. Bei diesem Verfahren wird eine wässrige BaSO₄-Aufschlämmung verwendet, die Ba-Ionen im Überschuss enthält. Dieser Aufschlämmung werden 0,1 bis 30 Gew.-% einer wässrigen Alkalisilikat-Lösung zugegeben, so dass zunächst Bariumsilikat ausfällt. Anschließend wird eine Mineralsäure zugegeben und ein pH-Wert kleiner oder gleich 7 zur Zersetzung des Bariumsilikats zu wasserhaltigem Siliziumdioxid eingestellt. Die beschriebenen Verfahrensschritte werden vorzugsweise bei Temperaturen von mindestens 40°C durchgeführt.

DE-C-44 31 735 offenbart ein Verfahren zur Herstellung eines anorganisch behandelten Füllstoffs für Polymere aus BaSO₄, wobei zunächst H₃PO₄ oder eine wasserlösliche Phosphatverbindung zu einer wässrigen BaSO₄-Suspension gegeben wird. Anschließend werden dann nacheinander bei einem pH-Wert kleiner 7,5 Na₂SiO₃ und bei einem pH-Wert größer 4,5 eine wässrige Aluminiumverbindung zur Suspension gegeben. Die beschriebenen Verfahrensschritte werden bei Temperaturen von 65 bis 75°C durchgeführt.

Nutzt man die in DE-C-33 47 191 oder DE-C-44 31 735 beschriebenen Verfahren zur anorganischen Nachbehandlung von ultrafeinen BaSO₄-Partikel mit typischen Partikeldurchmessern von d₅₀ kleiner als 0,1 µm, so kommt es bei den angewandten Temperaturen von 60°C zum Partikelwachstum durch Ostwald-Reifung. Die so modifizierten, gröberen Partikel reduzieren beim Einsatz im Klarlack die Transparenz. Setzt man das Ausgangsmaterial (nicht anorganisch modifizierte Partikel) ein, so hat der Klarlack eine deutlich höhere Transparenz.

Reduziert man die Temperatur bei der Oberflächenmodifizierung auf 40°C, so fallen die Nachbehandlungschemikalien neben den Partikeln aus und die Partikeloberfläche wird nicht modifiziert.

Aufgabe der vorliegenden Erfindung ist es, die Nachteile des Standes der Technik zu überwinden.

Eine weitere Aufgabe der Erfindung ist es, ultrafeine Partikel, insbesondere ultrafeine TiO₂-, Al₂O₃-, SiO₂-, BaSO₄-, ZnO- oder Fe₂O₃-Partikel, besonders bevorzugt ultrafeine BaSO₄- oder TiO₂-Partikel, ganz besonders bevorzugt ultrafeine BaSO₄-Partikel zur Verfügung zu stellen, deren Partikelgröße durch die Oberflächenbehandlung nicht verändert wird.

Überraschenderweise wird die Aufgabe durch das erfindungsgemäße Verfahren gelöst.

So wurde überraschenderweise gefunden, dass beim erfindungsgemäßen Verfahren zur anorganischen Oberflächenbehandlung von ultrafeinen Partikeln, insbesondere von ultrafeinen TiO₂-, Al₂O₃-, SiO₂-, BaSO₄-, ZnO- oder Fe₂O₃-Partikeln, besonders bevorzugt von ultrafeinen BaSO₄- oder TiO₂-Partikeln, ganz besonders bevorzugt von ultrafeinen BaSO₄-Partikeln die Partikelgröße der Partikel durch die Oberflächenbehandlung im wesentlichen nicht verändert wird. Das Partikelwachstum bei der anorganischen Oberflächenmodifizierung wurde dazu mit transmissionselektronenmikroskopischen Aufnahmen untersucht. "Im wesentlichen nicht verändert" im Sinne der vorliegenden Erfindung bedeutet, dass die Partikelgrößen der erfindungsgemäß oberflächenmodifizierten Partikel im Rahmen der Messgenauigkeit mit den Partikelgrößen der Ausgangspartikel übereinstimmen.

Zudem wurde überraschenderweise gefunden, dass mit dem erfindungsgemäßen Verfahren die Partikeloberfläche sehr gleichmäßig umhüllt wird.

Beim erfindungsgemäßen Verfahren findet die anorganische Oberflächenbehandlung der ultrafeinen Partikel in wässriger Aufschlämmung statt. Die Reaktionstemperatur soll dabei 50°C nicht übersteigen. Der pH-Wert der Suspension wird, beispielsweise unter Verwendung von NaOH, auf pH-Werte im Bereich größer 9 eingestellt. Unter starkem Rühren werden dann die Nachbehandlungschemikalien (anorganische Verbindungen), wasserlösliche anorganische Aluminium-, Antimon-, Barium-, Calcium-, Cer-, Cobalt-, Eisen-, Mangan-, Schwefel-, Silicium-, Strontium-, Vanadium-, Zink-, Zinn- und/oder Zirkon-Verbindungen zugegeben. Beispielhaft genannt seien Natriumsilikat, Natriumaluminat und Aluminiumsulfat. Der pH-Wert und die Mengen an Nachbehandlungschemikalien werden erfindungsgemäß so gewählt, dass letztere vollständig in Wasser gelöst vorliegen. Die Suspension wird intensiv gerührt, so dass sich die Nachbehandlungschemikalien homogen in der Suspension verteilen, vorzugsweise für mindestens 5 Minuten. Im nächsten Schritt wird der pH-Wert der Suspension innerhalb von 10 bis 90 Minuten auf pH-Werte von 5 bis 8 abgesenkt. Als vorteilhaft hat sich dabei erwiesen, den pH-Wert langsam und unter starkem Rühren abzusenken. Im Anschluss daran schließt sich erfindungsgemäß eine Reifezeit, vorzugsweise eine Reifezeit von etwa einer Stunde an. Die Temperaturen sollen dabei 50°C nicht überschreiten. Die wässrige Suspension wird dann gewaschen und getrocknet. Zur Trocknung der ultrafeinen, oberflächenmodifiziertem Partikel bieten sich beispielsweise die Sprühtrocknung, die Gefriertrocknung und/oder die Mahltrocknung an.

Zur Herstellung silanisierter, ultrafeiner, oberflächenmodifizierter Partikel, insbesondere zur Herstellung silanisierter, ultrafeiner, oberflächenmodifizierter TiO₂-, Al₂O₃-, SiO₂-, BaSO₄-, ZnO- oder Fe₂O₃-Partikel, besonders bevorzugt zur Herstellung silanisierter, ultrafeiner, oberflächenmodifizierter BaSO₄- oder TiO₂-Partikel, ganz besonders bevorzugt zur Herstellung silanisierter, ultrafeiner, oberflächenmodifizierter BaSO₄-Partikel wird eine wässrige Suspension aus bereits wie oben beschrieben hergestellten anorganisch oberflächenmodifizierten Partikeln mit mindestens einem Silan zusätzlich modifiziert. Als Silane werden vorzugsweise Alkoxyalkylsilane eingesetzt, besonders bevorzugt werden die Alkoxyalkylsilane ausgewählt aus Octyltriethoxysilan, gamma-Methacrylpropyltrimethoxysilan, gamma-Glycidoxypropyltrimethoxy-silan, gamma-Aminopropyltriethoxysilan, gamma-Aminopropyltrimethoxysilan, Triaminofunctionalsilan, gamma-Isocynatopropyltriethoxysilan, Vinyltrimethoxysilan und/oder hydrolysierten Silanen. Dazu wird vor oder nach der Waschung eine Suspension aus anorganisch oberflächenmodifizierten Partikeln unter starkem Rühren oder unter Dispergierung mit einem Alkoxyalkylsilan versetzt. Es schließt sich erfindungsgemäß eine Reifezeit an, vorzugsweise eine Reifezeit von 10 bis 60 Minuten, vorzugsweise bei Temperaturen von maximal 40°C. Anschließend wird wie bereits beschrieben weiter verfahren. Alternativ kann das Alkoxyalkylsilan auch nach der Trocknung auf die anorganisch modifizierten Partikel durch Aufmischen aufgebracht werden.

"Oberflächenmodifiziert" im Sinne der vorliegenden Erfindung bedeutet, dass anorganische Verbindungen auf ultrafeine Partikel, insbesondere auf ultrafeine TiO₂-, Al₂O₃-, SiO₂-, BaSO₄-, ZnO- oder Fe₂O₃-Partikel, besonders bevorzugt auf ultrafeine BaSO₄- oder TiO₂-Partikel, ganz besonders bevorzugt auf ultrafeine BaSO₄-Partikel, auf- bzw. ausgefällt sind.

Die erfindungsgemäß anorganisch oberflächenbehandelten (oberflächenmodifizierten) und optional silanisierten Partikel können in Lacken, insbesondere in Klarlacken, zur Verbesserung der Härte, Kratzfestigkeit, Chemikalienbeständigkeit, Glanz, Korrosionsbeständigkeit, Barriereeigenschaften und/oder Haftung eingesetzt werden. Darüber hinaus dienen sie als Dispergierhilfsmittel und rheologisches Additiv. Auch in Duroplasten, Elastomeren und Thermoplasten können die erfindungsgemäß hergestellten Partikel eingesetzt werden, um die mechanischen Eigenschaften, beispielsweise Härte, Zähigkeit, Festigkeit, Rissausbreitung, Verschleißraten und die thermischen Eigenschaften zu verbessern.

Gegenstand der Erfindung sind im Einzelnen:
- Ultrafeine Partikel mit einer Primärpartikelgröße d₅₀ von kleiner oder gleich 0,1 µm, die mit mindestens einer anorganischen Verbindung, ausgewählt aus Aluminium-, Antimon-, Barium-, Calcium-, Cer-, Cobalt-, Eisen-, Mangan-, Schwefel-, Silicium-, Strontium-, Vanadium-, Zink, Zinn- und/oder Zirkon-Verbindungen, oberflächenmodifiziert sind, wobei als ultrafeine Partikel vorzugsweise TiO₂, Al₂O₃, SiO₂, BaSO₄, ZnO oder Fe₂O₃, besonders bevorzugt BaSO₄ oder TiO₂ eingesetzt werden, ganz besonders bevorzugt BaSO₄ eingesetzt wird und wobei die Primärpartikelgröße der oberflächenmodifizierten Partikel im Rahmen der Messgenauigkeit der Primärpartikelgröße der Ausgangspartikel entspricht (nachfolgend auch oberflächenmodifizierte Partikel genannt);
- oberflächenmodifizierte Partikel, bei denen der Gewichtsanteil der anorganischen Verbindungen bezogen auf die Partikel 0,1 bis 50,0 Gew.-%, bevorzugt 1,0 bis 10,0 Gew.-% beträgt;
- oberflächenmodifizierte Partikel, die zusätzlich zur Oberflächenmodifizierung aus anorganischen Verbindungen mit mindestens einem Silan oder mehreren Silanen modifiziert sind;
- oberflächenmodifizierte Partikel, wobei die Silane Alkoxyalkylsilane sind;
- oberflächenmodifizierte Partikel, wobei die Alkoxyalkylsilane ausgewählt sind aus Octyltriethoxysilan, gamma-Methacrylpropyltrimethoxysilan, gamma-Glycidoxypropyltrimethoxy-silan, gamma-Aminopropyltriethoxysilan, gamma-Aminopropyltrimethoxysilan, Triaminofunctionalsilan, gamma-Isocynatopropyltriethoxysilan, Vinyltrimethoxysilan und/oder hydrolysierten Silanen,
- oberflächenmodifizierte wie oben beschrieben mit einer Primärpartikelgröße d₅₀ von 0,05 bis 0,005 µm;
- ein Verfahren zur Herstellung der erfindungsgemäßen Partikel dadurch gekennezeichnet, dass anorganische Verbindungen ausgewählt aus wasserlöslichen Aluminium-, Antimon-, Barium-, Calcium-, Cer-, Cobalt-, Eisen-, Mangan-, Schwefel-, Silicium-, Strontium-, Vanadium-, Zink-, Zinn und/oder Zirkon-Verbindungen, einer wässrigen Suspension von ultrafeinen Partikeln mit einer Primärpartikelgröße d₅₀ kleiner 0,1 µm, bevorzugt mit einer Primärpartikelgröße d₅₀ von 0,05 bis 0,005 µm bei Temperaturen von maximal 50°C zugegeben werden, und die anorganischen Verbindungen durch Einstellen des pH-Werts innerhalb von 10 bis 90 Minuten auf pH-Werte von 5 bis 8 auf die ultrafeinen Partikel ausgefällt werden und wobei als ultrafeine Partikel vorzugsweise TiO₂, Al₂O₃, SiO₂, BaSO₄, ZnO oder Fe₂O₃, besonders bevorzugt BaSO₄ oder TiO₂ eingesetzt werden, ganz besonders bevorzugt BaSO₄ eingesetzt wird;
- ein Verfahren zur anorganischen Oberflächenmodifizierung von ultrafeinen Partikeln, wobei zur anorganischen Oberflächenmodifizierung Verbindungen verwendet werden, die bei pH-Werten von 9 bis 14 wasserlöslich sind;
- ein Verfahren zur anorganischen Oberflächenmodifizierung von ultrafeinen Partikeln, wobei der pH-Wert der wässrigen Suspension bei der Zugabe der Nachbehandlungskomponenten zwischen 9 und 14 liegt;
- ein Verfahren zur anorganischen Oberflächenmodifizierung von ultrafeinen Partikeln, wobei der pH-Wert so gewählt wird, dass die Nachbehandlungschemikalie in der gewünschten Zugabemenge bei diesem pH-Wert vollständig gelöst bleibt;
- ein Verfahren zur anorganischen Oberflächenmodifizierung von ultrafeinen Partikeln, wobei der Gewichtsanteil der anorganischen Nachbehandlung, bezogen auf die Partikel, 0,1 bis 50,0 Gew.-%, bevorzugt 1,0 bis 10,0 Gew.-% beträgt;
- ein Verfahren zur anorganischen Oberflächenmodifizierung von ultrafeinen Partikeln, wobei die wässrige Suspension nach Zugabe der Nachbehandlungschemikalien für mindestens 5 Minuten unter starkem Rühren homogenisiert wird;
- ein Verfahren zur anorganischen Oberflächenmodifizierung von ultrafeinen Partikeln, wobei mehrere Nachbehandlungschemikalien nacheinander zugegeben und/oder ausgefällt werden;
- ein Verfahren zur anorganischen Oberflächenmodifizierung von ultrafeinen Partikeln, wobei sich der Fällung eine Reifezeit von 10 bis 150 Minuten bei einer Temperatur von maximal 50°C anschließt.
- ein Verfahren zur anorganischen Oberflächenmodifizierung von ultrafeinen Partikeln, wobei vor oder nach der Reifezeit ein Alkoxyalkylsilan oder mehrere Alkoxyalkylsilane zur anorganisch modifizierten Partikel-Suspension zugegeben werden;
- ein Verfahren zur anorganischen Oberflächenmodifizierung von ultrafeinen Partikeln, wobei die Suspension gewaschen und getrocknet wird.
- ein Verfahren zur anorganischen Oberflächenmodifizierung von ultrafeinen Partikeln, wobei die Suspension gewaschen und dann in Form einer wässrigen Paste weiterverwendet wird;
- ein Verfahren zur anorganischen Oberflächenmodifizierung von ultrafeinen Partikeln, wobei das getrocknete Material nach der Trocknung durch Mischung mit einem Alkoxyalkylsilan modifiziert wird;
- ein Verfahren zur anorganischen Oberflächenmodifizierung von ultrafeinen Partikeln, wobei als Alkoxyalkylsilan eingesetzt wird: Octyltriethoxysilan, gamma-Methacrylpropyltrimethoxysilan, gamma-Glycidoxypropyltrimethoxy-silan, gamma-Aminopropyltriethoxysilan, gamma-Aminopropyltrimethoxysilan, Triaminofunctionalsilan, gamma-Isocynatopropyltriethoxysilan, Vinyltrimethoxysilan und/oder hydrolysierte Silane;
- anorganisch oberflächenmodifizierte ultrafeine Partikel, herstellbar nach dem erfindungsgemäßen Verfahren;
- die Verwendung der erfindungsgemäß herstellbaren Partikel in Thermoplasten, Duroplasten und/oder Elastomeren;
- die Verwendung der erfindungsgemäß herstellbaren Partikel als Dispergierhilfsmittel in Beschichtungen;
- die Verwendung der erfindungsgemäß herstellbaren Partikel als Thixotropiemittel in Beschichtungen;
- die Verwendung der erfindungsgemäß herstellbaren Partikel in Beschichtungen zur Verbesserung der mechanischen Eigenschaften, bevorzugt zur Verbesserung der Härte, Haftung, Abriebfestigkeit, Korrosionsbeständigkeit, Barriereeigenschaften und/oder Kratzfestigkeit, der Chemikalienbeständigkeit, zur Erhöhung der Glasübergangstemperatur und/oder des Glanzes;
- die Verwendung der erfindungsgemäß herstellbaren Partikel in Duroplasten, Elastomeren und Thermoplasten, um die mechanischen Eigenschaften, beispielsweise die Härte, Zähigkeit, Festigkeit, Rissausbreitung, Verschleißraten und/oder die thermischen Eigenschaften zu verbessern.

Die Erfindung wird durch die nachfolgenden Beispiele näher erläutert, ohne sie darauf einzuschränken.

### Beispiel 1:

3,7 kg einer 6,5 Gew.-%igen wässrigen Suspension ultrafeiner Partikel mit mittleren Primärpartikeldurchmessern d₅₀ von 18 nm (Ergebnis von TEM-Untersuchungen) werden unter Rühren auf eine Temperatur von 40°C erhitzt. Als ultrafeine Partikel werden vorzugsweise TiO₂, Al₂O₃, SiO₂, BaSO₄, ZnO oder Fe₂O₃, besonders bevorzugt BaSO₄ oder TiO₂ eingesetzt, ganz besonders bevorzugt wird BaSO₄ eingesetzt. Mit 10 %-iger Natronlauge wird der pH-Wert der Suspension auf 12 eingestellt. Unter starkem Rühren werden gleichzeitig 14,7 ml einer wässrigen Natriumsilikatlösung (284 g SiO₂/L), 51,9 ml einer Aluminiumsulfat-Lösung (mit 75 g Al₂O₃/L) und 9,7 ml einer Natriumaluminat-Lösung (275 g Al₂O₃/L) unter Einhaltung des pH-Wertes von 12,0 zur Suspension gegeben. Die Suspension wird für weitere 10 Minuten unter starkem Rühren homogenisiert. Anschließend wird der pH-Wert langsam, vorzugsweise innerhalb von 60 Minuten, durch Zugabe einer 5 %igen Schwefelsäure auf einen pH-Wert von 7,5 eingestellt. Es schließt sich eine Reifezeit von 10 Minuten bei ebenfalls einer Temperatur 40°C an. Die Suspension wird dann auf eine Leitfähigkeit kleiner 100 µS/cm gewaschen und anschließend sprühgetrocknet.

Das Partikelwachstum bei der anorganischen Oberflächenmodifizierung wurde mit transmissionselektronenmikroskopischen Aufnahmen untersucht. Die aus den Bildern ausgewerteten mittleren Primärpartikelgrößen (d₅₀-Werte, Tabelle 1) unterscheiden sich kaum (TEM: Transmissionselektronenmikroskop). Es hat somit kein Partikelwachstum bei der anorganischen Oberflächenmodifizierung nach Beispiel 1 stattgefunden.

**Tabelle 1: mittlere Partikelgrößen Beispiel 1**

| | BaSO₄ (Ausgangsmaterial) | modifiziertes BaSO₄ (Beispiel 1) |
|---|---|---|
| d₅₀ (TEM) | 18 nm ± 2 nm | 19 nm ± 2 nm |

Die gemäß Beispiel 1 hergestellten Partikel wurden in einem Acrylat-Klarlack zur Prüfung des Einflusses der Oberflächenmodifizierung auf die Transparenz eingesetzt. Dazu wird ein Mahlansatz mit folgender Zusammensetzung hergestellt (anstelle des anorganisch modifizierten Bariumsulfats können alternativ die erfindungsgemäß hergestellten anorganisch modifizierten Partikel eingesetzt werden):

| | |
|---|---|
| Macrynal SM 510 n : | 42,3 Gewichtsteile |
| Xylol/MPA 2:1: | 42,3 Gewichtsteile |
| Bariumsulfat: | 55,0 Gewichtsteile |

Dieser Mahlansatz wird auf dem Skandex unter Verwendung von 2 mm Glasperlen 75 Minuten dispergiert. Die Dispergierfeinheit der so dispergierten Mahlpaste liegt unter 5 µm. Der Mahlansatz wird dann mit Härter und Hilfsmittellösung wie folgt verdünnt:

| | |
|---|---|
| Mahlpaste: | 39,4 Gewichtsteile |
| MP: Hilfsmittellösung: | 18,8 Gewichtsteile |
| Desmodur N75: | 16,5 Gewichtsteile |
| Macrynal SM 510 n: | 25,3 Gewichtsteile. |

Die Hilfsmittellösung setzt sich wie folgt zusammen:

| | |
|---|---|
| Irgastab DBTL: | 0,177 Gewichtsteile |
| Dimethylethanolamin: | 0,316 Gewichtsteile |
| Siliconöl L 050: | 0,829 Gewichtsteile |
| Solvesso 100: | 4,642 Gewichtsteile |
| Xylol: | 5,383 Gewichtsteile |
| Methoxipropylacetat: | 7,454 Gewichtsteile |

Es wurden Lackaufzüge mit Nassschichtdicken von 50 µm, 100 µm und 150 µm auf schwarzen Glasplatten hergestellt und über Nacht getrocknet. Die Remissionen Ry der getrockneten Lackschichten wurden unter Verwendung eines Y-Filters nach DIN 53140 vermessen. Die Ergebnisse sind in Tabelle 2 zusammengefasst.

**Tabelle 2:**

| Ry | BaSO₄ (Ausgangsmaterial) | modifiziertes BaSO₄ (Beispiel 1) |
|---|---|---|
| Nassschichtdicke 50 µm | 0,02 | 0,02 |
| Nassschichtdicke 100 µm | 0,05 | 0,05 |
| Nassschichtdicke 150 µm | 0,08 | 0,08 |

Die Daten zeigen, dass die anorganische Oberflächenmodifizierung des ultrafeinen BaSO₄ tatsächlich keinen negativen Effekt auf die Transparenz des Lacks hat.

### Beispiel 2:

In einem Rührgefäß werden 1500 g eines ultrafeinen Partikels mit einer Primärpartikelgröße d₅₀ von 30 nm in 6 L vollentsalztem (VE-) Wasser suspendiert. Als ultrafeine Partikel werden vorzugsweise TiO₂, Al₂O₃, SiO₂, BaSO₄, ZnO oder Fe₂O₃, besonders bevorzugt BaSO₄ oder TiO₂ eingesetzt, ganz besonders bevorzugt wird BaSO₄ eingesetzt. Diese Suspension wird mit einer Batch-Perlmühle unter Verwendung von 1,2 mm Glasperlen bei einer Temperatur von 35°C und einem Leistungseintrag von 40 Watt 30 Minuten dispergiert. Die dispergierte Suspension wird unter starkem Rühren mit 7,5 kg VE-Wasser verdünnt und auf 40°C temperiert. Der pH-Wert der Suspension wird mit 5%iger Natronlauge auf einen pH-Wert von 11 eingestellt. Unter Haltung dieses pH-Wertes werden dann 735 ml einer wässrigen Natriumsilikatlösung (77 g SiO₂/L) zur Suspension unter starkem Rühren gegeben. Mit 5%iger Schwefelsäure wird dann der pH-Wert langsam, vorzugsweise innerhalb von etwa 30 Minuten auf einen pH-Wert von 7,5 eingestellt. Nach einer Reifezeit von 10 Minuten bei einer Temperatur von 40°C wird die Suspension auf einen Leitfähigkeit kleiner 50 µS/cm gewaschen. Die gewaschene Suspension wird mit VE-Wasser auf einen Feststoffgehalt von 20 Gew.% eingestellt und mittels Dissolver 15 Minuten aufdispergiert. Eine Hälfte der Suspension wird gefriergetrocknet. Der zweiten Hälfte der Suspension werden unter Dissolverdispergierung 15 g eines gamma-Aminopropyltriethoxysilans (Silquest A-1100, Fa. GE Silicons) langsam zugegeben. Die Suspension wird anschließend für weitere 20 Minuten mit dem Dissolver dispergiert und dann im Gefriertrockner getrocknet.

Die gemäß Beispiel 2 hergestellten Partikel werden in einem Acrylat-Klarlack zur Verbessung der mechanischen Eigenschaften des Lackes eingesetzt. Dazu wird ein Mahlansatz mit folgender Zusammensetzung hergestellt (anstelle des anorganisch modifizierten Bariumsulfats können alternativ die erfindungsgemäß hergestellten anorganisch modifizierten Partikel eingesetzt werden):

| | |
|---|---|
| Macrynal SM 510 n: | 42,3 Gewichtsteile |
| Xylol/MPA 2:1: | 42,3 Gewichtsteile |
| Bariumsulfat: | 55,0 Gewichtsteile |

Dieser Mahlansatz wird auf dem Skandex unter Verwendung von 2 mm Glasperlen 75 Minuten dispergiert. Die Dispergierfeinheit der so dispergierten Mahlpaste liegt unter 5 µm. Der Mahlansatz wurde dann mit Härter und Hilfsmittellösung wie folgt verdünnt:

| | |
|---|---|
| Mahlpaste: | 39,4 Gewichtsteile |
| Hilfsmittellösung: | 18,8 Gewichtsteile |
| Desmodur N75: | 16,5 Gewichtsteile |
| Macrynal SM 510 n: | 25,3 Gewichtsteile |

Die Hilfsmittellösung setzt sich wie folgt zusammen:

| | |
|---|---|
| Irgastab DBTL: | 0,177 Gewichtsteile |
| Dimethylethanolamin: | 0,316 Gewichtsteile |
| Siliconöl L 050: | 0,829 Gewichtsteile |
| Solvesso 100: | 4,642 Gewichtsteile |
| Xylol: | 5,383 Gewichtsteile |
| Methoxipropylacetat | 7,454 Gewichtsteile |

Es werden Lackaufzüge mit Nassschichtdicken von 50 µm, 100 µm und 150 µm auf schwarzen Glasplatten hergestellt und über Nacht getrocknet. Die Remissionen Ry der getrockneten Lackschichten wurden unter Verwendung eines Y-Filters nach DIN 53140 vermessen. Die Ergebnisse sind in Tabelle 3 zusammengefasst.

**Tabelle 3:**

| Ry | BaSO₄ (Ausgangsmaterial) | anorganisch modifiziertes BaSO₄ (Beispiel 2) | Silanisiertes BaSO₄ (Beispiel 2) |
|---|---|---|---|
| Nassschichtdicke 50 µm | 0,07 | 0,08 | 0,09 |
| Nassschichtdicke 100 µm | 0,16 | 0,17 | 0,17 |
| Nassschichtdicke 150 µm | 0,25 | 0,26 | 0,26 |

Die Pendelhärte des Klarlackes wurde durch den Einsatz der anorganisch modifizierten bzw. silanisierten Partikel verbessert. Die Ergebnisse sind in Tabelle 4 zusammengefasst:

**Tabelle 4:**

| Material | Pendelhärte [Oszillationen] | | | |
|---|---|---|---|---|
| | Klarlack | 3 % PVK | 8 % PVK | 15 % PVK |
| BaSO₄ (Ausgangsmaterial) | 123 | 128 | 132 | 137 |
| Anorganisch modifiziertes BaSO₄ (Beispiel 2) | 123 | 132 | 133 | 140 |
| Silanisiertes BaSO₄ (Beispiel 2) | 123 | 135 | 137 | 147 |

### PVK: Pigmentvolumenkonzentration

Auch die Glasübergangstemperatur TG des Klarlackes konnte durch den Einsatz des modifizierten Bariumsulfates erhöht werden. Die Ergebnisse sind in Tabelle 5 zusammengefasst:

**Tabelle 5:**

| | TG [°C] |
|---|---|
| Klarlack | 57 |
| Klarlack + 15 % PVK BaSO₄ (Ausgangsmaterial) | 64 |
| Klarlack + 15 % PVK Silanisiertes BaSO₄ (Beispiel 2) | 72 |

Auch auf die Chemikalienbeständigkeit wirkt sich die anorganische Modifizierung der ultrafeinen Partikel positiv aus. Die Ergebnisse sind in Tabelle 6 zusammengefasst:

**Tabelle 6:**

| | Beständigkeit gegen 1%ige H₂SO₄ bei 50°C |
|---|---|
| Klarlack | Verätzung des Lackes |
| Anorganisch modifiziertes BaSO₄ (Beispiel 2) | keine Verätzung |
| Klarlack + 3 PVK Silanisiertes BaSO₄ (Beispiel 2) | keine Verätzung |

## Patentansprüche

1. Ultrafeine Partikel mit einer Primärpartikelgröße d₅₀ von kleiner 0,1 µm, **dadurch gekennzeichnet, dass** sie mit mindestens einer anorganischen Verbindung, ausgewählt aus Aluminium-, Antimon-, Barium-, Calcium-, Cer-, Cobalt-, Eisen-, Mangan-, Schwefel-, Silicium-, Strontium-, Vanadium-, Zink, Zinn- und/oder Zirkon-Verbindungen, oberflächenmodifiziert sind, wobei als ultrafeine Partikel vorzugsweise TiO₂, Al₂O₃, SiO₂, BaSO₄, ZnO oder Fe₂O₃, besonders bevorzugt BaSO₄ oder TiO₂ eingesetzt werden, ganz besonders bevorzugt BaSO₄ eingesetzt wird und wobei die transmissionselektronenmikroskopisch bestimmte Primärpartikelgröße der oberflächenmodifizierten Partikel im Rahmen der Messgenauigkeit der Primärpartikelgröße der Ausgangspartikel entspricht.

2. Ultrafeine Partikel gemäß Anspruch 1, **dadurch gekennzeichnet, dass** der Gewichtsanteil der anorganischen Verbindungen bezogen auf die Partikel 0,1 bis 50,0 Gew.-%, bevorzugt 1,0 bis 10,0 Gew.-% beträgt.

3. Ultrafeine Partikel gemäß Anspruch 1 oder 2, **dadurch gekennzeichnet, dass** sie zusätzlich zu der Oberflächenmodifizierung aus anorganischen Verbindungen mit mindestens einem Silan oder mehreren Silanen modifiziert sind.

4. Ultrafeine Partikel gemäß Anspruch 3, **dadurch gekennzeichnet, dass** die Silane Alkoxyalkylsilane sind.

5. Ultrafeine Partikel gemäß Anspruch 4, **dadurch gekennzeichnet, dass** die Alkoxyalkylsilane ausgewählt sind aus Octyltriethoxysilan, gamma-Methacrylpropyltrimethoxysilan, gamma-Glycidoxypropyltrimethoxy-silan, gamma-Aminopropyltriethoxysilan, gamma-Aminopropyltrimethoxysilan, Triaminofunctionalsilan, gamma-Isocynatopropyltriethoxysilan, Vinyltrimethoxysilan und/oder hydrolysierten Silanen.

6. Ultrafeine Partikel gemäß einem oder mehreren der Ansprüche 1 bis 5, **dadurch gekennzeichnet, dass** sie eine Primärpartikelgröße d₅₀ von 0,05 bis 0,005 µm aufweisen.

7. Verfahren zur Herstellung von ultrafeinen, oberflächenmodifizierten Partikeln nach einem der Ansprüche 1 bis 6, **dadurch gekennzeichnet, dass** anorganische Verbindungen ausgewählt aus wasserlöslichen Aluminium-, Antimon-, Barium-, Calcium-, Cer-, Cobalt-, Eisen-, Mangan-, Schwefel-, Silicium-, Strontium-, Vanadium-, Zink-, Zinn und/oder Zirkon-Verbindungen, einer wässrigen Suspension von ultrafeinen Partikeln mit einer Primärpartikelgröße d₅₀ kleiner 0,1 µm, bevorzugt mit einer Primärpartikelgröße d₅₀ von 0,05 bis 0,005 µm bei Temperaturen von maximal 50°C zugegeben werden, und die anorganischen Verbindungen durch Einstellen des pH-Werts innerhalb von 10 bis 90 Minuten auf pH-Werte von 5 bis 8 auf die ultrafeinen Partikel ausgefällt werden und wobei als ultrafeine Partikel vorzugsweise TiO₂, Al₂O₃, SiO₂, BaSO₄, ZnO oder Fe₂O₃, besonders bevorzugt BaSO₄ oder TiO₂ eingesetzt werden, ganz besonders bevorzugt BaSO₄ eingesetzt wird.

8. Verfahren gemäß Anspruch 7, **dadurch gekennzeichnet, dass** als anorganische Verbindungen solche ausgewählt werden, die bei pH-Werten von 9 bis 14 wasserlöslich sind.

9. Verfahren gemäß Anspruch 7 oder 8, **dadurch gekennzeichnet, dass** der Gewichtsanteil der anorganischen Verbindungen, bezogen auf die Partikel, 0,1 bis 50,0 Gew.-%, bevorzugt 1,0 bis 10,0 Gew.-% beträgt.

10. Verfahren gemäß einem oder mehreren der Ansprüche 7 bis 9, **dadurch gekennzeichnet, dass** der pH-Wert der wässrigen Suspension bei der Zugabe der anorganischen Verbindungen zwischen 9 und 14 liegt.

11. Verfahren gemäß einem oder mehreren der Ansprüche 7 bis 10, **dadurch gekennzeichnet, dass** die wässrige Suspension nach Zugabe der anorganischen Verbindungen unter starkem Rühren homogenisiert wird.

12. Verfahren gemäß einem oder mehreren der Ansprüche 7 bis 11, **dadurch gekennzeichnet, dass** mehrere anorganische Verbindungen nacheinander zugegeben und/oder ausgefällt werden.

13. Verfahren gemäß einem oder mehreren der Ansprüche 7 bis 12, **dadurch gekennzeichnet, dass** sich der Ausfällung der anorganischen Verbindungen eine Reifezeit anschließt.

14. Verfahren gemäß einem oder mehreren der Ansprüche 7 bis 13, **dadurch gekennzeichnet, dass** sich der Ausfällung der anorganischen Verbindungen eine Reifezeit von 10 bis 150 Minuten anschließt.

15. Verfahren gemäß einem oder mehreren der Ansprüche 7 bis 14, **dadurch gekennzeichnet, dass** sich der Ausfällung der anorganischen Verbindungen eine Reifezeit von 10 bis 150 Minuten bei einer Temperatur von maximal 50°C anschließt.

16. Verfahren gemäß einem oder mehreren der Ansprüche 7 bis 15, **dadurch gekennzeichnet, dass** vor oder nach der Reifezeit ein oder mehrere Silane, vorzugsweise Alkoxyalkylsilane zugegeben werden.

17. Verfahren gemäß einem oder mehreren der Ansprüche 7 bis 16, **dadurch gekennzeichnet, dass** die erhaltene Suspension gewaschen und zu einer wässrigen Paste weiterverarbeitet wird.

18. Verfahren gemäß einem oder mehreren der Ansprüche 7 bis 17, **dadurch gekennzeichnet, dass** die erhaltene Suspension gewaschen und getrocknet wird.

19. Verfahren gemäß Anspruch 18, **dadurch gekennzeichnet, dass** das getrocknete Material nach der Trocknung durch Mischung mit mindestens einem Silan, vorzugsweise mit mindestens einem Alkoxyalkylsilan modifiziert wird.

20. Verfahren gemäß Anspruch 19, **dadurch gekennzeichnet, dass** die Alkoxyalkylsilane ausgewählt sind aus Octyltriethoxysilan, gamma-Methacrylpropyltrimethoxysilan, gamma-Glycidoxypropyltrimethoxy-silan, gamma-Aminopropyltriethoxysilan, gamma-Aminopropyltrimethoxysilan, Triaminofunctionalsilan, gamma-Isocynatopropyltriethoxysilan, Vinyltrimethoxysilan und/oder hydrolysierte Silanen

21. Verwendung der ultrafeinen, oberflächenmodifizierten Partikel gemäß einem oder mehreren der Ansprüche 1 bis 6 in Thermoplasten, Duroplasten und/oder Elastomeren.

22. Verwendung der ultrafeinen, oberflächenmodifizierten Partikel gemäß einem oder mehreren der Ansprüche 1 bis 6 als Dispergierhilfsmittel in Beschichtungen.

23. Verwendung der ultrafeinen, oberflächenmodifizierten Partikel gemäß einem oder mehreren der Ansprüche 1 bis 6 als Thixotropiemittel in Beschichtungen.

24. Verwendung der ultrafeinen, oberflächenmodifizierten Partikel gemäß einem oder mehreren der Ansprüche 1 bis 6 in Beschichtungen zur Verbesserung der mechanischen Eigenschaften, bevorzugt zur Verbesserung der Härte, Haftung, Abriebfestigkeit, Korrosionsbeständigkeit, Barriereeigenschaften, Kratzfestigkeit, der Chemikalienbeständigkeit, der Glasübergangstemperatur und/oder des Glanzes.

25. Verwendung der ultrafeinen, oberflächenmodifizierten Partikel gemäß einem oder mehreren der Ansprüche 1 bis 6 in Duroplasten, Elastomeren und Thermoplasten zur Verbesserung der mechanischen Eigenschaften, bevorzugt zur Verbesserung der Härte, Zähigkeit, Festigkeit, Rissausbreitung, Verschleißraten und/oder der thermischen Eigenschaften.

## Claims

1. Ultrafine particles with a primary particle size d₅₀ of less than 0.1 µm, **characterized in that** they have been surface-modified with at least one inorganic compound selected from aluminium, antimony, barium, calcium, cerium, cobalt, iron, manganese, sulphur, silicon, strontium, vanadium, zinc, tin and/or zirconium compounds, wherein preferably, the ultrafine particles used are TiO₂, Al₂O₃, SiO₂, BaSO₄, ZnO or Fe₂O₃, particular preferably BaSO₄ or TiO₂, more particularly preferably BaSO₄, and wherein the primary particle size of the surface-modified particles determined by transmission electron microscopy lies within the limit of accuracy for the measurement of the primary particle size of the initial particles.

2. Ultrafine particles as claimed in claim 1, **characterized in that** the proportion by weight of the inorganic compounds in relation to the particles is 0.1% to 50.0% by weight, preferably 1.0% to 10.0% by weight.

3. Ultrafine particles as claimed in claim 1 or claim 2, **characterized in that** in addition to the surface modification by inorganic compounds, they are modified with at least one silane or a plurality of silanes.

4. Ultrafine particles as claimed in claim 3, **characterized in that** the silanes are alkoxyalkylsilanes.

5. Ultrafine particles as claimed in claim 4, **characterized in that** the alkoxyalkylsilanes are selected from octyltriethoxysilane, gamma-methacrylpropyltrimethoxysilane, gamma-glycidoxypropyltrimethoxysilane, gamma-aminopropyltriethoxysilane, gamma-aminopropyltrimethoxysilane, triaminofunctional silane, gamma-isocynatopropyltriethoxysilane, vinyltrimethoxysilane and/or hydrolysed silanes.

6. Ultrafine particles as claimed in one or more of claims 1 to 5, **characterized in that** they have a primary particle size d₅₀ of 0.05 to 0.005 µm.

7. A method for the manufacture of ultrafine surface-modified particles as claimed in one of claims 1 to 6, **characterized in that** inorganic compounds selected from water-soluble aluminium, antimony, barium, calcium, cerium, cobalt, iron, manganese, sulphur, silicon, strontium, vanadium, zinc, tin and/or zirconium compounds are added to an aqueous suspension of ultrafine particles with a primary particle size d₅₀ of less than 0.1 µm, preferably with a primary particle size d₅₀ of 0.05 to 0.005 µm at maximum temperatures of 50°C, and by setting the pH to a pH of 5 to 8 for within 10 to 90 minutes, the inorganic compounds are precipitated onto the ultrafine particles and wherein preferably, the ultrafine particles used are TiO₂, Al₂O₃, SiO₂, BaSO₄, ZnO or Fe₂O₃, particular preferably BaSO₄ or TiO₂, more particularly preferably BaSO₄.

8. The method as claimed in claim 7, **characterized in that** the inorganic compounds selected are those which are water-soluble at a pH of 9 to 14.

9. The method as claimed in claim 7 or claim 8, **characterized in that** the proportion by weight of the inorganic compounds in relation to the particles is 0.1% to 50.0% by weight, preferably 1.0% to 10.0% by weight.

10. The method as claimed in one or more of claims 7 to 9, **characterized in that** the pH of the aqueous suspension when the inorganic compounds are added lies in the range 9 to 14.

11. The method as claimed in one or more of claims 7 to 10, **characterized in that** after adding the inorganic compounds, the aqueous suspension is homogenized by vigorous stirring.

12. The method as claimed in one or more of claims 7 to 11, **characterized in that** a plurality of inorganic compounds are added and/or precipitated one after the other.

13. The method as claimed in one or more of claims 7 to 12, **characterized in that** the precipitation of the inorganic compounds is followed by a maturation period.

14. The method as claimed in one or more of claims 7 to 13, **characterized in that** the precipitation of the inorganic compounds is followed by a maturation period of 10 to 150 minutes.

15. The method as claimed in one or more of claims 7 to 14, **characterized in that** the precipitation of the inorganic compounds is followed by a maturation period of 10 to 150 minutes at a maximum temperature of 50°C.

16. The method as claimed in one or more of claims 7 to 15, **characterized in that** one or more silanes, preferably alkoxyalkylsilanes, are added before or after the maturation period.

17. The method as claimed in one or more of claims 7 to 16, **characterized in that** the suspension obtained is washed and processed further in order to form an aqueous paste.

18. The method as claimed in one or more of claims 7 to 17, **characterized in that** the suspension obtained is washed and dried.

19. The method as claimed in claim 18, **characterized in that** after drying, the dried material is modified by mixing with at least one silane, preferably with at least one alkoxyalkylsilane.

20. The method as claimed in claim 19, **characterized in that** the alkoxyalkylsilanes are selected from octyltriethoxysilane, gamma-methacrylpropyltrimethoxysilane, gamma-glycidoxypropyltrimethoxysilane, gamma-aminopropyltriethoxysilane, gamma-aminopropyltrimethoxysilane, triaminofunctional silane, gamma-isocynatopropyltriethoxysilane, vinyltrimethoxysilane and/or hydrolysed silanes.

21. Use of ultrafine, surface-modified particles as claimed in one or more of claims 1 to 6, in thermoplastics, thermosets and/or elastomers.

22. Use of ultrafine, surface-modified particles as claimed in one or more of claims 1 to 6, as dispersing agents in coatings.

23. Use of ultrafine, surface-modified particles as claimed in one or more of claims 1 to 6, as a thixotropic agent in coatings.

24. Use of ultrafine, surface-modified particles as claimed in one or more of claims 1 to 6 in coatings in order to improve the mechanical properties, preferably in order to improve the hardness, adhesion, abrasion resistance, corrosion resistance, barrier properties, scratch resistance, resistance to chemicals, glass transition temperature and/or gloss.

25. Use of ultrafine, surface-modified particles as claimed in one or more of claims 1 to 6 in thermosets, elastomers and thermosets in order to improve the mechanical properties, preferably in order to improve the hardness, toughness, strength, crack propagation, abrasion rate and/or thermal properties.

## Revendications

1. Particules ultrafines avec une taille particulaire primaire d₅₀ inférieure à 0,1 µm, **caractérisées en ce qu'**elles sont modifiées en surface avec au moins un composé anorganique, choisi parmi des composés d'aluminium, d'antimoine, de baryum, de calcium, de cérium, de cobalt, de fer, de manganèse, de soufre, de silicium, de strontium, de vanadium, de zinc, d'étain et/ou de zirconium, étant mis en oeuvre en tant que particules ultrafines de préférence du TiO₂, de l'Al₂O₃, du SiO₂, du BaSO₄, du ZnO ou du Fe₂O₃, de manière particulièrement préférentielle, du BaSO₄ ou du TiO₂, de manière tout particulièrement préférentielle, du BaSO₄ et la taille particulaire primaire déterminée au microscope électronique par transmission des particules modifiées en surface correspondant dans le cadre de la précision de mesure à la taille particulaire primaire des particules de départ.

2. Particules ultrafines selon la revendication 1, **caractérisées en ce que** la part en poids des composés anorganiques, en rapport aux particules est de 0,1 à 50,0 % en poids, de préférence de 1,0 à 10,0 % en poids.

3. Particules ultrafines selon la revendication 1 ou 2, **caractérisées en ce qu'**en supplément de la modification de surface, elles sont modifiées à partir de composés anorganiques avec au moins un silane ou plusieurs silanes.

4. Particules ultrafines selon la revendication 3, **caractérisées en ce que** les silanes sont des alcoxyalkylsilanes.

5. Particules ultrafines selon la revendication 4, **caractérisées en ce que** les alcoxyalkylsilanes sont choisis parmi l'octyltriéthoxysilane, le gamma-méthacrylpropyltriméthoxysilane, le gamma-glycidoxypropyltriméthoxysilane, le gamma-aminopropyltriéthoxysilane, le gamma-aminopropyltriméthoxysilane, le silane fonctionnel triamino, le gamma-isocynatopropyltriéthoxysilane, le vinyltriméthoxysilane et/ou des silanes hydrolysés.

6. Particules ultrafines selon l'une quelconque ou plusieurs des revendications 1 à 5, **caractérisées en ce qu'**elles présentent une taille particulaire primaire d₅₀ de 0,05 à 0,005 µm.

7. Procédé destiné à fabriquer des particules ultrafines modifiées en surface selon l'une quelconque des revendications 1 à 6, **caractérisé en ce qu'**on ajoute des composés anorganiques, choisis parmi des composés hydrosolubles d'aluminium, d'antimoine, de baryum, de calcium, de cérium, de cobalt, de fer, de manganèse, d'oxygène, de soufre, de silicium, de strontium, de vanadium, de zinc, d'étain et/ou de zirconium à une suspension aqueuse de particules ultrafines d'une taille particulaire primaire d₅₀ inférieure à 0,1 µm, de préférence d'une taille particulaire primaire d₅₀ de 0,05 à 0,005 µm à des températures d'un maximum de 50°C et **en ce qu'**on précipite les composés anorganiques par réglage de la valeur du pH dans les 10 à 90 minutes à des valeurs de pH de 5 à 8 sur les particules ultrafines et étant mis en oeuvre en tant que particules ultrafines de préférence du TiO₂, de l'Al₂O₃, du SiO₂, du BaSO₄, du ZnO ou du Fe₂O₃, de manière particulièrement préférentielle, du BaSO₄ ou du TiO₂, de manière tout particulièrement préférentielle, du BaSO₄.

8. Procédé selon la revendication 7, **caractérisé en ce qu'**on choisit comme composés anorganiques ceux qui sont hydrosolubles à des valeurs de pH de9 à 14.

9. Procédé selon la revendication 7 ou 8, **caractérisé en ce que** la part en poids des composés anorganiques, en rapport aux particules est de 0,1 à 50,0 % en poids, de préférence de 1,0 à 10,0 % en poids.

10. Procédé selon l'une quelconque ou plusieurs des revendications 7 à 9, **caractérisé en ce que** la valeur pH de la suspension aqueuse lors de l'ajout des composés anorganiques se situe entre 9 et 14.

11. Procédé selon l'une quelconque ou plusieurs des revendications 7 à 10, **caractérisé en ce qu'**après l'ajout des composés anorganique, on homogénéise la suspension aqueuse sous forte agitation.

12. Procédé selon l'une quelconque ou plusieurs des revendications 7 à 11, **caractérisés en ce qu'**on ajoute et/ou on précipite successivement plusieurs composés anorganiques.

13. Procédé selon l'une quelconque ou plusieurs des revendications 7 à 12, **caractérisé en ce qu'**à la précipitation des composés anorganiques fait suite un temps de maturation.

14. Procédé selon l'une quelconque ou plusieurs des revendications 7 à 13, **caractérisé en ce qu'**à la précipitation des composés anorganiques fait suite un temps de maturation de 10 à 150 minutes.

15. Procédé selon l'une quelconque ou plusieurs des revendications 7 à 14, en ce qu'à la précipitation des composés anorganiques fait suite un temps de maturation de 10 à 150 minutes à une température d'un maximum de 50°C.

16. Procédé selon l'une quelconque ou plusieurs des revendications 7 à 15, **caractérisé en ce qu'**avant ou après le temps de maturation, on ajoute un ou plusieurs silanes, de préférence des alcoxyalkylsilanes.

17. Procédé selon l'une quelconque ou plusieurs des revendications 7 à 16, **caractérisé en ce qu'**on lave la suspension obtenue et on la remet en oeuvre en une pâte aqueuse.

18. Procédé selon l'une quelconque ou plusieurs des revendications 7 à 17, **caractérisé en ce qu'**on lave et on fait sécher la suspension obtenue.

19. Procédé selon la revendication 18, **caractérisé en ce qu'**on modifie la matière séchée après le séchage par mélange avec au moins un silane, de préférence avec au moins un alcoxyalkylsilane.

20. Procédé selon la revendication 19, **caractérisé en ce qu'**on choisit les alcoxyalkylsilanes parmi le gamma-méthacrylpropyltriméthoxysilane, le gamma-glycidoxypropyltriméthoxysilane, le gamma-aminopropyltriéthoxysilane, le gamma-aminopropyltriméthoxysilane, le silane fonctionnel triamino, le gamma-isocynatopropyltriéthoxysilane, le vinyltriméthoxysilane et/ou des silanes hydrolysés.

21. Utilisation des particules ultrafines modifiées en surface selon l'une quelconque ou plusieurs des revendications 1 à 6 dans des matières thermoplastiques, duroplastiques et/ou dans des élastomères

22. Utilisation des particules ultrafines modifiées en surface selon l'une quelconque ou plusieurs des revendications 1 à 6 en tant qu'auxiliaires de dispersion dans des revêtements.

23. Utilisation des particules ultrafines modifiées en surface selon l'une quelconque ou plusieurs des revendications 1 à 6 en tant qu'agents thixotropes dans des revêtements.

24. Utilisation des particules ultrafines modifiées en surface selon l'une quelconque ou plusieurs des revendications 1 à 6 dans des revêtements pour améliorer les propriétés mécaniques, de préférence pour améliorer la dureté, l'adhérence, la résistance à l'abrasion, la résistance à la corrosion, les fonctions de barrière, la résistance aux rayures, la résistance aux produits chimiques, la température de transition vitreuse et/ou la brillance.

25. Utilisation des particules ultrafines modifiées en surface selon l'une quelconque ou plusieurs des revendications 1 à 6 dans des matières duroplastiques, des élastomères et des matières thermoplastiques pour améliorer les propriétés mécaniques, de préférence pour améliorer la dureté, la ténacité, la solidité, la propagation des fissures, les taux d'usure et/ou les propriétés thermiques.
